# EUROPEAN PATENT APPLICATION

(11) **EP 3 312 744 A1**
(43) Date of publication of application: **25.04.2018**
(21) Application number: 17800692.0
(22) Date of filing: 24.03.2017
(51) Int. Cl.: G06F 17/30

(54) **INFORMATION ENTRY STORAGE METHOD, SYSTEM, DEVICE, AND COMPUTER READABLE STORAGE MEDIUM**

(30) Priority: 23.08.2016 CN 201610711748
(71) Applicant: Ping An Technology (Shenzhen) Co., Ltd., Shenzhen, Guangdong 518000 (CN)
(72) Inventor: WANG, Engui, Shenzhen Guangdong 518000 (CN); XIANG, Tongde, Shenzhen Guangdong 518000 (CN); SHI, Jianjian, Shenzhen Guangdong 518000 (CN); QIAN, Huimin, Shenzhen Guangdong 518000 (CN)
(74) Representative: Osterhoff, Utz
(86) International application number: PCT/CN2017/077973
(87) International publication number: WO 2018/036155

(57) **Abstract**

An information storage method is disclosed, including: receiving an information item and a corresponding information tag; determining a column family corresponding to the information tag by means of a preset tag configuration table; selecting the column family corresponding to the information tag from column families pre-configured in a database. An information storage system performing the information storage method is disclosed. The present disclosure realizes a column-oriented information storage and a more scalable database with higher performance, allowing maintenance and management of users' information more flexible and convenient.

## Description

### FIELD OF THE INVENTION

The present disclosure relates to a field of data storage technology, and in particular to an information storage method, system, device, and computer-readable storage medium.

### BACKGROUND OF THE INVENTION

User information as a very important material is often used in company, for example, the user information can be used for maintaining old customers and exploding new customers. Currently, the user information is stored with a wide table, however, the wide table constitutes a major flaw of bad scalability, with increasing of the business, the amount of customers as well as collected information will be accordingly increasing, new user information can't be stored in appropriate type. Therefore, how to provide an information storage scheme with high flexible and easy to manage becomes an urgent problem.

### SUMMARY OF THE INVENTION

The present disclosure involves an information storage method, system, device, and computer-readable storage medium, aiming to solve the technical problem that the managing flexibility of user information is poor.

The information storage method provided in an embodiment includes:
receiving an information item and a corresponding information tag;
determining a column family corresponding to the information tag by means of a preset tag configuration table;
selecting the column family corresponding to the information tag from column families pre-configured in a database, storing the information item to the column family corresponding to the information tag.

Preferably, the information tag includes a first-class tag and a sub-class tag, the column family includes one or multiple sub-columns, step of determining a column family corresponding to the information tag by means of a preset tag configuration table includes:
determining the column family corresponding to the first-class tag and the sub-column corresponding to the sub-class tag, by means of a preset tag configuration table.

The step of selecting the column family corresponding to the information tag from column families pre-configured in a database, storing the information item to the column family corresponding to the information tag includes:
selecting the column family corresponding to the first-class tag from column families pre-configured in the database;
selecting the sub-column corresponding to the sub-class tag, from the column family corresponding to the first-class tag, storing the information item into the sub-column corresponding to the sub-class tag.

Preferably, the information storage method further includes:
if receiving the configuration information of tags updated in the user information view, updating the column families and/or sub-columns in the database as well as updating the tag configuration table.

Preferably, the information storage method further includes:
if receiving updating information of the information item, updating the information item stored in the sub-column according to the updating information.

Preferably, the step of selecting the sub-column corresponding to the sub-class tag, from the column family corresponding to the first-class tag, storing the information item into the sub-column corresponding the sub-class tag includes:
obtaining an extension tag of the information item, storing the extension tag of the information item into the sub-column corresponding to the sub-class tag.

The information storage system provided in the present disclosure includes:
an obtaining module, configured for receiving the information item and corresponding tag in the user information view;
a determining module, configured for determining the column family corresponding to the tag, by means of a preset tag configuration table;
a storing module, configured for selecting the column family corresponding to the information tag from column families pre-configured in a database, storing the information item to the column family corresponding to the information tag.

Preferably, the information tag includes a first-class tag and a sub-class tag, the column family includes one or multiple sub-columns, the determining module further includes:
determining the column family corresponding to the first-class tag and the sub-column corresponding to the sub-class tag, by means of a preset tag configuration table;

Preferably, the storing module is further configured for:
selecting the column family corresponding to the first-class tag from column families pre-configured in the database; selecting the sub-column corresponding to the sub-class tag, from the column family corresponding to the first-class tag, storing the information item into the sub-column corresponding to the sub-class tag.

Preferably, the information storage system further includes:
an updating module, configured for if receiving the configuration information of tags updated in the user information view, updating the column families and/or sub-columns in the database as well as updating the tag configuration table.

Preferably, the updating module is further configured for:
if receiving updating information of the information item, updating the information item stored in the sub-column.

Preferably, the storing module is further configured for:
obtaining an extension tag of the information item, storing the extension tag of the information item into the sub-column corresponding to the sub-class tag.

Moreover, the information storage device provided in the present disclosure includes a processor, a network interface, and a storage medium; the storage medium stores an information storage program.
the network interface is connected with a database for communicating with the database;
the processor is configured for executing the information storage program to perform following steps:
receiving an information item and a corresponding information tag from a user information view;
determining a column family corresponding to the information tag by means of a preset tag configuration table; and
selecting the column family corresponding to the information tag from column families pre-configured in a database, storing the information item to the column family corresponding to the information tag.

Preferably, the information tag includes a first-class tag and a sub-class tag, the column family comprises one or multiple sub-columns, the processor is configured for executing the information storage program to perform following steps:
determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

Preferably, the processor is configured for executing the information storage program to perform a following step:
if receiving the configuration information of tags updated in the user information view, updating the column families and/or sub-columns in the database as well as updating the tag configuration table.

Preferably, the processor is configured for executing the information storage program to perform a following step:
if receiving updating information of the information item, updating the information item stored in the sub-column according to the updating information.

Preferably, the processor is configured for executing the information storage program to perform a following step:
obtaining an extension tag of the information item, storing the extension tag of the information item into the sub-column corresponding to the sub-class tag.

Moreover, the computer-readable storage medium provided in the present disclosure has one or more programs stored thereon, which, when being executed by one or more processors, cause the one or more processors to perform following steps:
receiving an information item and a corresponding information tag from a user information view;
determining a column family corresponding to the information tag by means of a preset tag configuration table; and
selecting the column family corresponding to the information tag from column families pre-configured in a database, storing the information item to the column family corresponding to the information tag.

Preferably, the information tag comprises a first-class tag and a sub-class tag, the column family comprises one or multiple sub-columns, when being executed by the one or more processors, the one or more programs cause the one or more processors to perform following steps:
determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

Preferably, when being executed by the one or more processors, the one or more programs cause the one or more processors to perform a following step:
if receiving the configuration information of tags updated in the user information view, updating the column families and/or sub-columns in the database as well as updating the tag configuration table.

Preferably, when being executed by the one or more processors, the one or more programs cause the one or more processors to perform a following step:
if receiving updating information of the information item, updating the information item stored in the sub-column according to the updating information.

Preferably, when being executed by the one or more processors, the one or more programs cause the one or more processors to perform a following step:
obtaining an extension tag of the information item, storing the extension tag of the information item into the sub-column corresponding to the sub-class tag.

Embodiments of the present disclosure refer to an information storage method and system thereof. By means of the obtained information item and corresponding tag in the user information view, different user information of different types is obtained. Then by means of a preset tag configuration table, the column family corresponding to the tag is determined, that is the column family of the user information. Then selecting the column family corresponding to the information tag from column families pre-configured in a database and storing the information item to the column family corresponding to the information tag which realizes column-oriented storing information. Because of flexible addition or deletion of the column family capable, the database owns more excellent performance with better scalability, as well as supports high concurrency of reading and writing operation, making maintenance and management of users' information more flexible and convenient. Meanwhile, no storage space of the database is taken up when the column family is vacant, thereby saving the cost.

### BRIEF DESCRIPTION OF THE DRAWINGS

Fig. 1 is a flow chat of an information storage method of a first embodiment of the present disclosure;
Fig. 2 is a flow chat of an information storage method of a second embodiment of the present disclosure;
Fig. 3 is a flow chat of an information storage method of a third embodiment of the present disclosure;
Fig. 4 is a flow chat of an information storage method of a fourth embodiment of the present disclosure;
Fig. 5 is a flow chat of an information storage method of a fifth embodiment of the present disclosure;
Fig. 6 is a block diagram illustrating an information storage system of a first embodiment, a second embodiment or a fifth embodiment of the present disclosure;
Fig. 7 is a block diagram illustrating an information storage system of a third embodiment or a fourth embodiment of the present disclosure;
Fig. 8 is a schematic diagram of a structure of a database in an embodiment of the present disclosure; and
Fig. 9 is a schematic view showing hardware application environment of the methods of Figs. 1 to 5.

Objective achieving, function features, and advantages of the present disclosure are further described with reference to the embodiments and the accompany drawings.

### DETAILED DESCRIPTION OF THE EMBODIMENTS

Technical solutions of the present invention are further described in detail with reference to the accompanying drawings and embodiments. It is to be understood that the specific embodiments described herein are merely used for describing the present invention, but are not intended to limit the present invention.

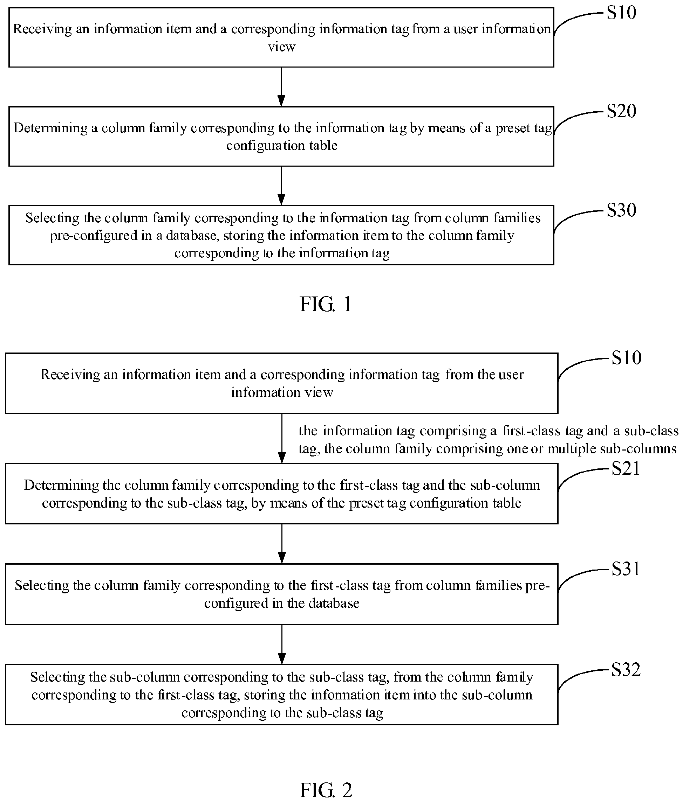

With reference to Fig. 1, in a first embodiment, an information storage method includes steps as follows.

Step S10, receiving an information item and a corresponding information tag from a user information view.

The present disclosure configures the column family corresponding to the tag, stores the information item of users into the column family, which realizes column-oriented storing and managing information, and hence realizes flexibly addition or deletion of the column family, so as to manage the user information more flexibly.

In an embodiment, firstly the server receives the information item and corresponding information tag from user information view.

The user information view records all types of user information by the information tag and the information item mapping each other. The tag represents the type of the information item, such as basic information, user value, user behavior, user service, user relationship, membership information, user risk, user insights and business information. The information items are some specific information contents such as basic information including name and contact method. As a result, the information items corresponding to different tags may have different contents due to different types of information items.

Therefore, the server receives the information item and the corresponding information tag from the user information view.

The step S20, determining the column family corresponding to the tag, by means of a preset tag configuration table.

After obtaining the information item and the corresponding information tag from the user information view, the server determines the column family corresponding to the tag by means of the preset tag configuration table.

It needs to be illustrated, the preset tag configuration table records column families corresponding to all types of tags, each column family corresponding to specific tag is configured for storing the corresponding information item. For easy management, each name of the column family is in consistent with the specific tag.

The step S30, selecting the column family corresponding to the information tag from column families pre-configured in a database, storing the information item to the column family corresponding to the information tag.

After obtaining the column family corresponding to the information item, the server selects the column family corresponding to the specific tag, from column families pre-configured in the database, storing the information item into the column family, hence realizing the information storage of drawer model.

When there are multiple information items in the user information view, concurrently obtaining all the information items and corresponding tags in the user information view; determining the corresponding column families according to the tags corresponding to each of the information items; afterward storing each of the information items into the determined column families to realize the parallel process of the information storage.

One column family may be considered as a drawer, different information items with different tags are stored in different drawers, allowing more clear classification of the user information. Creative design concept makes the tags and information items have scenarios and practical values.

In the embodiment, obtaining the information item and corresponding tags from the user information view, that is, obtaining different types of user information, afterward, determining the column family corresponding to the tag by means of the preset tag configuration table, of which the column family corresponding to the tag is the column family of information item; then, selecting the column family from column families pre-configured in the database, storing the information item into the column family corresponding to the tag, which realizes the column-oriented storing information. Because of flexible addition or deletion of the column family, the database has more excellent performance with better scalability, as well as supports high concurrency of reading and writing operation, making maintenance and management of users' information more flexible and convenient. Meanwhile, no storage space of the database is taken up when the column family is vacant, thereby saving the cost.

Furthermore, with reference to Fig. 2, an information storage method of a second embodiment is provided. Based on the embodiment as shown in Fig. 1, in the method of the second embodiment, the tag corresponding to the information item includes a first-class tag and a sub-class tag, the column family includes one or multiple sub-columns. In the second embodiment, the step S20 includes a step S21:

determining the column family corresponding to the first-class tag and the sub-column corresponding to the sub-class tag, by means of a preset tag configuration table.

The step of S30 further includes:
step S31, selecting the column family corresponding to the first-class tag from column families pre-configured in the database; and
step S32, selecting the sub-column corresponding to the sub-class tag, from the column family corresponding to the first-class tag, storing the information item into the sub-column corresponding to the sub-class tag.

In this embodiment, the information tag corresponding to the information item includes a first-class tag and a sub-class tag.

In some embodiments, the first-class tag represents the information type of the information item, the information granularity is comparative rough. The first tag includes one or multiple sub-class tags, the sub-class tags are used for subdividing the information type to describe the user precisely, in this case the information granularity is comparatively fine.

For instance, the user information view of the embodiment includes nine first-class tags, such as basic information, user value, user behavior, user service, user relationship, membership information, user risk, user insights and business information.

In which, the basic information includes the sub-class tags such as user's essential attribute and contact method to describe user's essential characteristics. The user value includes the sub-class tags such as user's asset and user's loyalty to describe user's value. The user behavior includes the sub-class tags such as user's channel preference and user's payment preference to describe user's behavior preference. The user service includes the sub-class tags such as feedback information, and service information to describe the service the user received and service preference. The user relationship includes the sub-class tags such as family relationship and the relationship between the applicant for insurance and the insured to describe user's family. The membership information includes the sub-class tags such as user classification of very important person (as abbreviated as VIP) to describe user's membership information. The user risk includes the sub-class tags such as credit rating and fraud risk to describe user's credit situation and financial risk. The user insight includes the sub-class tags such as division of users and user's portrayal to describe user's tendency and potential characteristic. The business information includes the sub-class tags such as contract information and claim settlements to describe the user's related business transaction.

In some embodiments, a column family may include one or multiple sub-columns, the tag configuration table records each column family and sub-columns under the column family, as well as the specific tag corresponding to each column family, and the sub-class tags corresponding to the sub-columns.

Then the server obtains the information item, the first-class tag and the sub-class tag corresponding to the information item, determining the column family corresponding to the first-class tag.

Afterwards, the server selects the sub-column corresponding to the sub-class tag from the sub-columns subordinated to the column family corresponding to the first-class tag.

After determining the column family corresponding to the first-class tag and the sub-column corresponding to the sub-class tag, selecting the column family corresponding to the first-class tag from column families pre-configured in the database.

After selecting the column family corresponding to the first-class tag from column the database, selecting the sub-column corresponding to the sub-class tag, from the column family corresponding to the first-class tag, storing the information item into the sub-column corresponding to the sub-class tag.

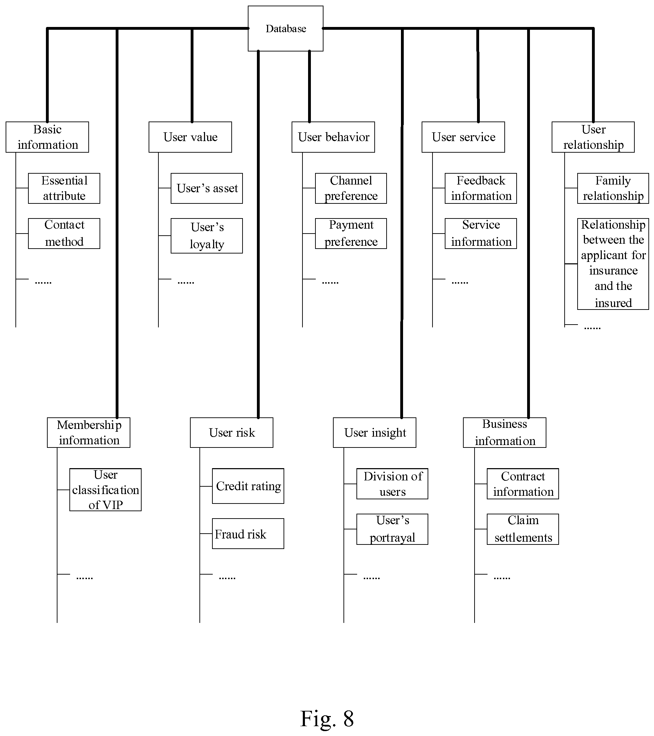

With reference to Fig. 8, taking the column families pre-configured in the current database include basic information, user value, user behavior, user service, user relationship, membership information, user risk, user insight and business information as an example to illustrate the method of the embodiment.

The basic information includes the sub-columns such as user's essential attribute and contact method. The user value includes the sub-columns such as user's asset and user's loyalty. The user behavior includes the sub-columns such as user's channel preference and user's payment preference. The user service includes the sub-columns such as feedback information and service information. The user relationship includes the sub-columns such as family relationship and the relationship between the applicant for insurance and the insured. The membership information includes the sub-columns such as user classification of very important person (as abbreviated as VIP). The user risk includes the sub-columns such as credit rating and fraud risk. The user insight includes the sub-columns such as division of users and user's portrayal. The business information includes the sub-columns such as contract information and claim settlements.

Therefore, after the server obtains the first-class tag and the sub-class tag corresponding to the information item, by means of the tag configuration table, the server determines the column family corresponding to the first-class tag and the sub-column corresponding to the sub-class tag.

For instance, if the first-class tag corresponding to the current information item is user behavior, the sub-class tag is channel preference, then the server determines the column family corresponding to the first-class tag is user behavior and the sub-column corresponding to the sub-class tag is channel preference.

Then the server selects the user behavior from 9 column families in the database, and selects the sub-column namely the channel preference from the column family namely the user behavior, and stores the information item into the sub-column namely channel preference.

Thus, storing the information item has been realized.

In the embodiment of the present disclosure, the tag corresponding to the information item includes one first-class tag or a sub-class, the column family includes one or multiple sub-columns, and hence the information granularity is further fined. After obtaining the first-class tag and the sub-class tag corresponding to the information item, by means of the tag configuration table, determining the column family corresponding to the first-class tag and the sub-column corresponding to the sub-class tag, thus obtaining the sub-column corresponding to the information item. Afterward, selecting the column family from the pre-configured database, and selecting one or multiple sub-columns from the column family, storing the information item into the one or multiple sub-columns. Thus the information granularity that is comparatively fine can be stored in an appropriate location. Since the first-class tag and sub-class tag are used to fine information granularity of the information item, in order to store the information item with fined information granularity, the embodiment extends the information storage infrastructure and provides one or multiple sub-columns under the column family, which improves flexibility of managing information items with different fine information granularity and ensures the ordering of storing the information items.

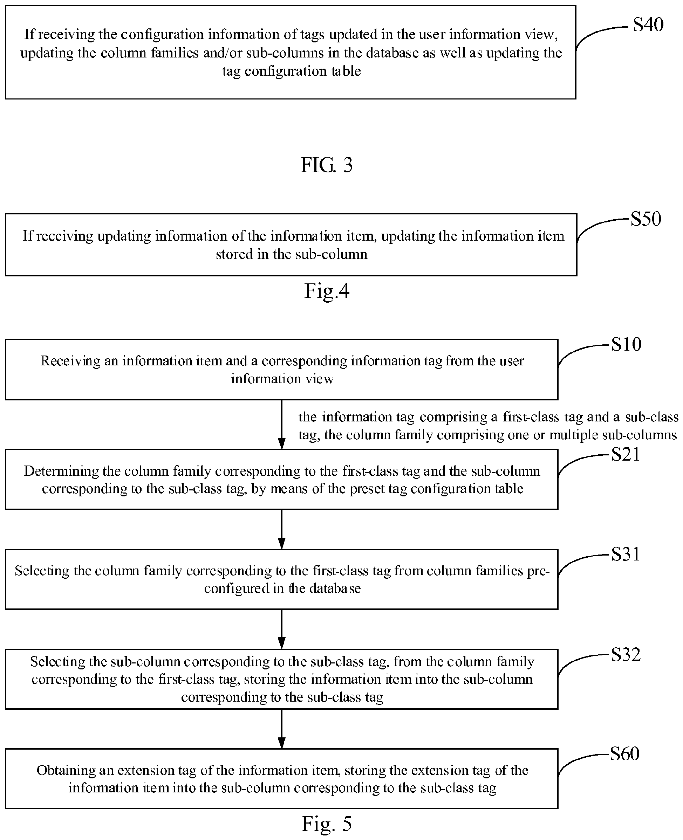

Furthermore, with reference to Fig. 3, based on the embodiment as shown in Fig. 2, an information storage method of a third embodiment of the present disclosure further includes step S40.

Step S40, if receiving the configuration information of tags updated in the user information view, updating the column families and/or sub-columns in the database as well as updating the tag configuration table.

When the tags representing the information items in the user information view cannot satisfy the requirement, administrator may update the tags, for instance, when present tags cannot effectively describe newly-added information, new tags are required. Or when some tags become useless and corresponding information items don't need to be collected, these tags are required to be deleted.

After the administrator updates the tags configuration in the user information view, sending an instruction to the server for updating, the instruction carrying the configuration information of updated tags. Of course, the user information view and the database can be correlated, such that the server can obtain the configuration information of updated tags when detecting the configuration information of tags being updated in the user information view. Of course, in some embodiments, it is also available after the tags in the user information view have been updated, actively sending the configuration information of the tags being updated to the server.

After obtaining the configuration information of the tags being updated, the server may determine whether the current updated tags are added, deleted or revised tags and whether the current updated tags are first-class tags or sub-class tags; if the current updated tags are first-class tags, then obtaining the sub-class tags updating information under the first-class tags; if the current updated tags are sub-class tags, then obtaining the first-class tags that the sub-class tags belong to.

Then, according to the configuration information of the tags being updated, the server updates the column families and/or the sub-columns in the database accordingly. For instance, if a first-class tag needs to be deleted currently, determining the column family corresponding to the first-class tag by means of the tag configuration table and deleting the column family as well as the sub-columns subordinate to the column family; if a sub-class tag needs to be deleted currently, then determining the first-class tag that the sub-class tag belongs to, and the column family corresponding to the first-class tag, afterward selecting the specific sub-columns according to the column family, then deleting the specific sub-columns; if a first-class tag needs to be added currently, adding a column family in the database corresponding to the added first-class tag, meanwhile, adding sub-columns under the added column family and corresponding to sub-class tags subordinate to the added first-class tag; if a sub-class tag needs to be added currently, according to a specific first-class tag that the sub-class tag belongs to, determining a corresponding column family, afterward adding the sub-column corresponding to the sub-class tag into the column family.

During the process of updating the column families and/or sub-columns in the database, the server updates the tag configuration table accordingly, to maintain the mapping relationship between the column families and the first-class tags, and the mapping relationship between the sub-columns and the sub-class tags the newest state.

In the embodiment, if receiving the configuration information of tags updated in the user information view, then updating the column families and/or sub-columns in the database and updating the tag configuration table accordingly. Because of flexible addition and deletion of the column families or sub-columns, the storing infrastructure may be adjusted flexibly according to the requirements of the user information, to allow the column families of the information items in line with the actual requirements, to improve the flexibility of information management.

Furthermore, with reference to Fig. 4, according to the above embodiment as shown in Fig. 2 or Fig. 3, an information storage method of a fourth embodiment of the present disclosure further includes step S50.

Step S50, if receiving updating information of the information item, updating the information item stored in the sub-column.

When the user information is changed, the administrator may update the information item in the user information view, inputting the updating information of the information item.

When the server receives the updating information of the information item, determining a corresponding sub-column according to the tag configuration table and the tag corresponding to the information item, and updating the information item stored in the sub-column according to the updating information. For instance, if updating information is deleting the information item, then deleting the information item stored in specific sub-column; if the updating information is revising the information item, then revising the information item stored in specific sub-column.

Therefore, concurrency updating of the information items in the user information view and stored in the database may be realized.

In the embodiment, if receiving the updating information of the information item in the user information view, then updating the information item stored in the sub-column accordingly, therefore, when the information item in the user information view is changed, the database can be timely updated to maintain consistence of the information data.

Furthermore, with reference to Fig. 5, based on the embodiment as shown in Fig. 2, an information storage method of a fifth embodiment of the present disclosure further includes step S60 after the step S32.

Step S60, obtaining an extension tag of the information item, storing the extension tag of the information item into the sub-column corresponding to the sub-class tag.

The extension tag of the information item is configured for further describing attribute of the information item, such as describing quality of the information item; if the information item comes from Internet, then the extension tag of the information item is low credibility; if the information item comes from any contract, then the extension tag thereof is high credibility.

After determining specific sub-columns according to the sub-class tag of the information item, the server obtains the extension tag of the information item, then stores the information item as well as the extension tag thereof to the specific sub-columns.

In the embodiment, after determining the sub-columns according to the sub-class tags of information item, then obtaining the extension tag thereof that is configured for further illustrating user information in the user information view, afterward, the extension tag is stored into the sub-column which may realize storing the extension tag. The embodiment allows related configuration information of the information item be stored in order without missing out any related information, and hence maintains the completeness of the information.

It needs to illustrate that, a person skilled in the art should understand that the processes of the methods in the above embodiments can be, in full or in part, implemented by computer programs instructing underlying hardware, the programs can be stored in a computer-readable storage medium, the program can include the processes in the embodiments of the various methods when it is being executed. The storage medium can be a disk, a CD, a Read-Only Memory (ROM) and magnetic disk, or optical disk and so on.

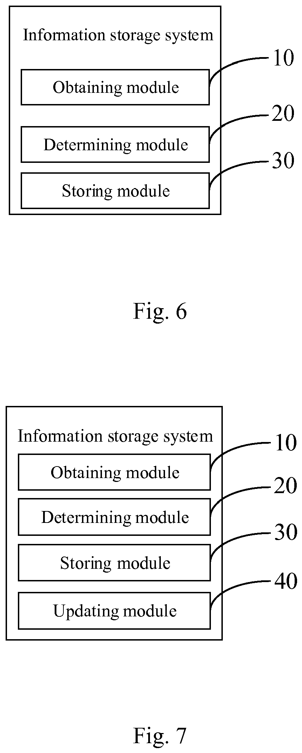

With reference to Fig. 6, an information storage system of a first embodiment of the present disclosure includes an obtaining module 10, a determining module 20, and a storing module 30.

The obtaining module 10 is configured for receiving the information item and corresponding tag in the user information view.

The present disclosure configures the column family corresponding to the tag, stores the information item of users into the column family, which realizes column-oriented storing and managing information, and hence realizes flexibly addition or deletion of the column family, so as to manage the user information more flexibly. The information storage may be arranged in the service.

In an embodiment, firstly the obtaining module 10 receives the information item and corresponding information tag from user information view.

In which, the user information view records all types of user information by the information tag and the information item mapping each other. The tag represents the type of the information item, such as basic information, user value, user behavior, user service, user relationship, membership information, user risk, user insights and business information. The information items are some specific information contents such as basic information including name and contact method. As a result, the information items corresponding to different tags may have different contents due to different types of information items.

Therefore, the obtaining module 10 receives the information item and the corresponding information tag from the user information view.

The determining module 20 is configured for determining the column family corresponding to the tag, by means of a preset tag configuration table.

After obtaining the information item and the corresponding information tag from the user information view, the determining module 20 determines the column family corresponding to the tag by means of the preset tag configuration table.

It needs to be illustrated, the preset tag configuration table records column families corresponding to all types of tags, each column family corresponding to a specific tag is configured for storing the corresponding information item. For easy management, each name of the column family is in consistent with the specific tag.

The storing module 30 is configured for selecting the column family corresponding to the information tag from column families pre-configured in a database, storing the information item to the column family corresponding to the information tag.

After obtaining the column family corresponding to the information item, the storing module 30 selects the column family corresponding to the specific tag, from column families pre-configured in the database and stores the information item into the column family, thereby realizing the information storage of drawer model.

When there are multiple information item in the user information view, concurrently obtaining all the information items and corresponding tags in the user information view; determining the corresponding column families according to the tags corresponding to each of the information items; afterward storing each of the information items into the determined column families to realize the parallel process of the information storage.

One column family may be considered as a drawer, different information items with different tags are stored in different drawers, allowing more clear classification of the user information. Creative design concept makes the tags and information items to have scenarios and practical values.

In the embodiment, the obtaining module 10 obtains the information item and corresponding tags from the user information view, that is obtaining all types of different user information, afterward, the determining module 20 determines the column family corresponding to the tag by means of the preset tag configuration table, of which the column family corresponding to the tag is the column family of information item; then, the storing module 30 selects the column family from column families pre-configured in the database, stores the information item into the column family corresponding to the tag, which realizes the column-oriented storing information. Because of flexible addition or deletion of the column family, the database owns more excellent performance with better scalability, as well as supports high concurrency of reading and writing operation, making maintenance and management of users' information more flexible and convenient. Meanwhile, no storage space of the database is taken up when the column family is vacant, thereby saving the cost.

Furthermore, with reference to Fig. 6, an information storage system of a second embodiment is provided. In the second embodiment, the tag corresponding to the information item includes a first-class tag and a sub-class tag, the column family includes one or multiple sub-columns.

The determining module 20 is further configured for determining the column family corresponding to the first-class tag and the sub-column corresponding to the sub-class tag, by means of a preset tag configuration table;

The storing module 30 is further configured for:

selecting the column family corresponding to the first-class tag from column families pre-configured in the database, and storing the information item into the sub-column corresponding to the sub-class tag.

In this embodiment, the information tag corresponding to the information item includes a first-class tag and a sub-class tag.

In some embodiments, the first-class tag represents the information type of the information item, the information granularity is comparative rough. The first tag includes one or multiple sub-class tags, the sub-class tags are used for subdividing the information type to describe the user precisely, in this case the information granularity is comparative fine.

For instance, the user information view of the embodiment includes nine first-class tags, such as basic information, user value, user behavior, user service, user relationship, membership information, user risk, user insights and business information.

In which, the basic information includes the sub-class tags such as user's essential attribute and contact method to describe user's essential characteristics. The user value includes the sub-class tags such as user's asset and user's loyalty to describe user's value. The user behavior includes the sub-class tags such as user's channel preference and user's payment preference to describe user's behavior preference. The user service includes the sub-class tags such as feedback information and service information to describe the service the user received and service preference. The user relationship includes the sub-class tags such as family relationship and the relationship between the applicant for insurance and the insured etc. to describe user's family. The membership information includes the sub-class tags such as user classification of very important person (as abbreviated as VIP) to describe user's membership information. The user risk includes the sub-class tags such as credit rating and fraud risk to describe user's credit situation and financial risk. The user insight includes the sub-class tags such as division of users and user's portrayal to describe user's tendency and potential characteristic. The business information includes the sub-class tags such as contract information and claim settlements to describe the user's related business transaction.

In some embodiments, a column family may include one or multiple sub-columns, the tag configuration table records each column family and sub-columns under the column family, as well as the specific tag corresponding to each column family, and the sub-class tags corresponding to the sub-columns.

Then the obtaining module 10 obtains the information item, the first-class tag and the sub-class tag corresponding to the information item, the determining module 20 determines the column family corresponding to the first-class tag by means of the preset tag configuration table.

Afterward, the determining module 20 selects the sub-column corresponding to the sub-class tag from the sub-columns subordinated to the column family corresponding to the first-class tag.

After the determining module 20 determines the column family corresponding to the first-class tag and the sub-column corresponding to the sub-class tag, the storing module 30 selects the column family corresponding to the first-class tag from column families pre-configured in the database.

After selecting the column family corresponding to the first-class tag from column the database, the storing module 30 selects the sub-column corresponding to the sub-class tag, from the column family corresponding to the first-class tag, and stores the information item into the sub-column corresponding to the sub-class tag.

With reference to Fig. 8, taking the column families pre-configured in the current database include basic information, user value, user behavior, user service, user relationship, membership information, user risk, user insight and business information as an example to illustrate the system of the embodiment.

In which, the basic information includes the sub-columns such as user's essential attribute and contact method. The user value includes the sub-columns such as user's asset and user's loyalty. The user behavior includes the sub-columns such as user's channel preference and user's payment preference. The user service includes the sub-columns such as feedback information and service information. The user relationship includes the sub-columns such as family relationship and the relationship between the applicant for insurance and the insured. The membership information includes the sub-columns such as user classification of very important person (as abbreviated as VIP). The user risk includes the sub-columns such as credit rating and fraud risk. The user insight includes the sub-columns such as division of users and user's portrayal. The business information includes the sub-columns such as contract information and claim settlements.

Therefore, after the obtaining module 10 obtains the first-class tag and the sub-class tag corresponding to the information item, by means of the tag configuration table, the determining module 20 determines the column family corresponding to the first-class tag and the sub-column corresponding to the sub-class tag.

For instance, if the first-class tag corresponding to the current information item is user behavior, the sub-class tag is channel preference, then the determining module 20 determines the column family corresponding to the first-class tag is user behavior and the sub-column corresponding to the sub-class tag is channel preference.

Then the storing module 30 would select the user behavior from 9 column families in the database, and select the sub-column namely the channel preference from the column family namely the user behavior, storing the information item into the sub-column namely channel preference.

Thus, storing the information item has been realized.

In the embodiment of the present disclosure, the tag corresponding to the information item includes one first-class tag or a sub-class, the column family includes one or multiple sub-columns, and hence the information granularity is further fined. After the obtaining module 10 obtains the first-class tag and the sub-class tag corresponding to the information item, the determining module 20 by means of the tag configuration table, determines the column family corresponding to the first-class tag and the sub-column corresponding to the sub-class tag, thus obtains the sub-column corresponding to the information item. Afterward, the storing module 30 selects the column family from the pre-configured database, and selects one or multiple sub-columns from the column family, stores the information item into the one or multiple sub-columns. Thus the information granularity that is comparatively fine can be stored in an appropriate location. Since the first-class tag and sub-class tag are used to fine information granularity of the information item, in order to store the information item with fined information granularity, the embodiment extends the information storage infrastructure and provides one or multiple sub-columns under the column family, which improves flexibility of managing information items with different fine information granularity and ensures the ordering of storing the information items.

Furthermore, with reference to Fig. 7, according to the above second embodiment, an information storage system of a third embodiment of the present disclosure further includes an updating module 40.

The updating module 40 is configured for, if receiving the configuration information of tags updated in the user information view, updating the column families and/or sub-columns in the database as well as updating the tag configuration table.

When the tags representing the information items in the user information view cannot satisfy the requirement, administrator may update the tags, for instance, when present tags cannot effectively describe newly-added information, new tags are required. Or when some tags become useless and corresponding information items don't need to be collected, these tags are required to be deleted.

After the administrator updates the tags configuration in the user information view, an instruction is sent to the server for updating, the instruction carrying the configuration information of updated tags. Of course, the user information view and the database can be correlated, such that the updating module 40 can obtains the configuration information of updated tags when detecting the configuration information of tags being updated in the user information view. Of course, in some embodiments, it is also available after the tags in the user information view have been updated, actively sending the configuration information of the tags being updated to the updating module 40.

After the updating module 40 obtains the configuration information of the tags being updated, the updating module 40 can determine whether the current updated tags are added, deleted or revised tags and whether the current updated tags are first-class tags or sub-class tags; if the current updated tags are first-class tags, then obtaining the sub-class tags updating information under the first-class tags; if the current updated tags are sub-class tags, then obtaining the first-class tags that the sub-class tags belong to.

Then, the updating module 40, according to the configuration information of the tags being updated, updates the column families and/or the sub-columns in the database accordingly. For instance, if a first-class tag needs to be deleted currently, the updating module 40 determines the column family corresponding to the first-class tag by means of the tag configuration table and deletes the column family as well as the sub-columns subordinate to the column family; if a sub-class tag needs to be deleted currently, the updating module 40 determines the first-class tag that the sub-class tag belongs to, and the column family corresponding to the first-class tag, afterward selects the specific sub-columns according to the column family, then deletes the specific sub-columns; if a first-class tag needs to be added currently, the updating module 40 adds a column family in the database corresponding to the added first-class tag, meanwhile, adds sub-columns under the added column family and corresponding to sub-class tags subordinate to the added first-class tag; if a sub-class tag needs to be added currently, the updating module 40, according to a specific first-class tag that the sub-class tag belongs to, determines a corresponding column family, afterward adds the sub-column corresponding to the sub-class tag into the column family.

During the process of updating the column families and/or sub-columns in the database, the updating module 40 updates the tag configuration table accordingly, to maintain the mapping relationship between the column families and the first-class tags, and the mapping relationship between the sub-columns and the sub-class tags the newest state.

In the embodiment, if receiving the configuration information of tags updated in the user information view, then the updating module 40 updates the column families and/or sub-columns in the database and updates the tag configuration table accordingly. Because of flexible addition or deletion of the column families or sub-columns capable, the storing infrastructure may be adjusted flexibly according to the requirements of the user information, to allow the column families of the information items in line with the actual requirements, to improve the flexibility of information management.

Furthermore, with reference to Fig. 7, according to the above third embodiment, in an information storage system of a fourth embodiment of the present disclosure, the updating module 40 is further configured for:

if receiving updating information of the information item, updating the information item stored in the sub-column.

When the user information is changed, the administrator may update the information item in the user information view, inputting the updating information of the information item.

When the updating module 40 receives the updating information of the information item, the updating module 40 determines a corresponding column according to the tag configuration table and a corresponding sub-column, then updating the information item stored in the sub-column. For instance, if the updating information of the information item is deleting information item, then the updating module 40 deletes the information item stored in specific sub-column; if the updating information of the information item is revising information item, then the updating module 40 revises the information item stored in specific sub-column.

Therefore, concurrency updating of the information items in the user information view and stored in the database may be realized.

In the embodiment, if receiving the updating information of the information item in the user information view, then the updating module 40 updates the information item stored in the sub-column accordingly, therefore, when the information item in the user information view is changed, the database can be timely updated to maintain consistence of the information data.

Furthermore, with reference to Fig. 6, based on the embodiment shown in Fig. 2, in an information storage system of a fifth embodiment, the storing module 30 is further configured for:

obtaining an extension tag of the information item, and storing the extension tag of the information item into the sub-column corresponding to the sub-class tag.

The extension tag of the information item is configured for further describing attribute of the information item, such as describing quality of the information item; if the information item comes from Internet, then the extension tag of the information item is low credibility; if the information item comes from any contract, then the extension tag thereof is high credibility.

After the determining module 20 determines specific sub-columns according to the sub-class tag of the information item, the storing module 30 obtains the extension tag of the information item, then stores the information item as well as the extension tag thereof to the specific sub-columns.

In the embodiment, after the determining module 20 determines the sub-columns according to the sub-class tags of information item, then the storing module 30 obtains the extension tag thereof that is configured for further illustrating user information in the user information view, afterward, the extension tag is stored into the sub-column which may realize storing the extension tag. The embodiment allows related configuration information of the information item be stored in order without missing out any related information, and hence maintains the completeness of the information.

It is noted that, in hardware implementation, the obtaining module 10, the determining module 20, the storing module 30, and the updating module 40 can be embedded in the information storage system as hardware or independent from the information storage system, or stored in a memory of the information storage system such that a processor can execute these modules to perform corresponding operations. The processor can be a central processing unit (CPU), a micro-processor, or a single chip, etc.

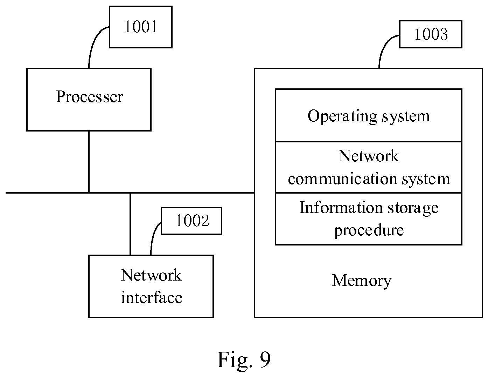

Referring to Fig. 9, which is a schematic view of an information storage device showing a hardware application environment of the information storage method and the information storage system of the above embodiments of the present disclosure.

In some embodiments, the information storage device can be a personal computer, a smart mobile phone, a tablet computer, an e-reader, or a portable computer terminal, etc.

As shown in Fig. 9, the information storage device includes a processor 1001, e.g. a CPU, a network interface 1002, and a storage medium 1003. The processor 1001, the network interface 1002, and the storage medium 1003 communicates with each other through a system bus. The network interface 1002 can be a standard wired interface or a wireless interface (e.g., a WI-FI interface). The storage medium 1003 can be a high speed RAM or a stable non-volatile memory such as a disk memory.

In other embodiments, the information storage device may further include a user interface, a camera, a radio frequency (RF) circuit, a sensor, an audio circuit, and a WIFI module. The user interface may include a display, an input unit such as a keyboard. It is understood that the user interface can be wired or wireless.

It is understood that the structure shown in Fig. 9 does not intend to limit the information storage device to this embodiment. In other embodiments, the information storage device may include more or less components, or combine some components, or have a different arrangement of these components.

The storage medium 1003 may store an operation system, a network communication module, and an information storage program. The operation system includes programs for managing and controlling hardware and software of the information storage device, thereby supporting the operation and execution of the network communication module, the information storage program, and other programs. The network communication module is configured for managing and controlling the network interface 1002.

The network interface 1002 is configured for connecting and communicating with a database, such that information items can be stored in the database. The processor 1001 is configured for executing the information storage program stored in the storage medium 1003 to perform following steps:
receiving an information item and a corresponding information tag from a user information view;
determining a column family corresponding to the information tag by means of a preset tag configuration table; and
selecting the column family corresponding to the information tag from column families pre-configured in a database, storing the information item to the column family corresponding to the information tag.

In an embodiment, the information tag includes a first-class tag and a sub-class tag, the column family includes one or multiple sub-columns, the processor 1001 is configured for executing the information storage program stored in the storage medium 1003 to perform following steps:
determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

In an embodiment, the processor 1001 is configured for executing the information storage program stored in the storage medium 1003 to perform a following step:
if receiving the configuration information of tags updated in the user information view, updating the column families and/or sub-columns in the database as well as updating the tag configuration table.

In an embodiment, the processor 1001 is configured for executing the information storage program stored in the storage medium 1003 to perform a following step:
if receiving updating information of the information item, updating the information item stored in the sub-column according to the updating information.

In an embodiment, the processor 1001 is configured for executing the information storage program stored in the storage medium 1003 to perform a following step:
obtaining an extension tag of the information item, storing the extension tag of the information item into the sub-column corresponding to the sub-class tag.

Embodiments of the information storage device are similar to those of the information storage method and information storage system as described above, which are not given in detail hereinafter again.

The present disclosure further provides a computer-readable storage medium, with one or more programs stored thereon, which, when being executed by one or more processors, cause the one or more processors to perform following steps:
receiving an information item and a corresponding information tag from a user information view;
determining a column family corresponding to the information tag by means of a preset tag configuration table;
selecting the column family corresponding to the information tag from column families pre-configured in a database, storing the information item to the column family corresponding to the information tag.

In an embodiment, the information tag includes a first-class tag and a sub-class tag, the column family includes one or multiple sub-columns, when being executed by the one or more processors, the one or more programs cause the one or more processors to perform following steps:

determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

In an embodiment, when being executed by the one or more processors, the one or more programs cause the one or more processors to perform a following step:
if receiving the configuration information of tags updated in the user information view, updating the column families and/or sub-columns in the database as well as updating the tag configuration table.

In an embodiment, when being executed by the one or more processors, the one or more programs cause the one or more processors to perform a following step:
if receiving updating information of the information item, updating the information item stored in the sub-column according to the updating information.

In an embodiment, when being executed by the one or more processors, the one or more programs cause the one or more processors to perform a following step:
obtaining an extension tag of the information item, storing the extension tag of the information item into the sub-column corresponding to the sub-class tag.

Embodiments of the information storage medium are similar to those of the information storage method and information storage system as described above, which are not given in detail hereinafter again.

It should also be noted that in this article the term "includes", "comprises", or any other variant thereof , is intended to mean not exclusive in inclusion , so that a process, method, article, or device containing a set of elements not only includes those elements, but also other elements not explicitly listed, or an inherent element of the process, method, article, or device. Without further restrictions, the element restricted by the phrase or sentence "include a...." does not exclude other same elements from the process, method, article, or device.

The serial numbers of the above embodiments are only used for illustration and are not intended to represent advantages and disadvantages of these embodiments. A person skilled in the art should understand that the processes of the methods in the above embodiments can be, in full or in part, implemented by computer programs instructing underlying hardware, the programs can be stored in a computer-readable storage medium, the program can include the processes in the embodiments of the various methods when it is being executed. The storage medium can be a disk, a CD, a Read-Only Memory (ROM) and other non-transitory storage mediums or a RAM and so on.

The foregoing descriptions are merely embodiments of the present invention, and are not intended to limit the scope of the present invention. An equivalent structural or equivalent process alternation made by using the content of the specification and drawings of the present invention, or an application of the content of the specification and drawings directly or indirectly to another related technical field, shall fall within the protection scope of the present invention.

## Claims

1. An information storage method comprising:
receiving an information item and a corresponding information tag from a user information view;
determining a column family corresponding to the information tag by means of a preset tag configuration table; and
selecting the column family corresponding to the information tag from column families pre-configured in a database, storing the information item to the column family corresponding to the information tag.

2. The information storage method of claim 1, wherein the information tag comprises a first-class tag and a sub-class tag, the column family comprises one or multiple sub-columns, the step of determining a column family corresponding to the information tag by means of the preset tag configuration table comprises:
determining, by means of the preset tag configuration table, the column family corresponding to the first-class tag and the sub-column corresponding to the sub-class tag;
the step of selecting the column family corresponding to the information tag from column families pre-configured in a database, storing the information item to the column family corresponding to the information tag comprises:
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

3. The information storage method of claim 2, wherein the information storage method further comprises:
if receiving the configuration information of tags updated in the user information view, updating the column families and/or sub-columns in the database as well as updating the tag configuration table.

4. The information storage method of claim 3, wherein the information storage method further comprises: if receiving updating information of the information item, updating the information item stored in the sub-column according to the updating information.

5. The information storage method of claim 2, wherein the step of selecting the sub-column corresponding to the sub-class tag, from the column family corresponding to the first-class tag, storing the information item into the sub-column corresponding the sub-class tag further comprises:
obtaining an extension tag of the information item, storing the extension tag of the information item into the sub-column corresponding to the sub-class tag.

6. An information storage system comprising:
an obtaining module, configured for receiving an information item and a corresponding information tag from a user information view;
a determining module, configured for, by means of a preset tag configuration table determining the column family corresponding to the tag; and
a storing module, configured for selecting the column family corresponding to the information tag from column families pre-configured in a database, and storing the information item to the column family corresponding to the information tag.

7. The information storage system of claim 6, wherein the information tag comprises a first-class tag and a sub-class tag, the column family comprises one or multiple sub-columns, the determining module is further configured for:
determining the column family corresponding to the first-class tag and the sub-column corresponding to the sub-class tag, by means of the preset tag configuration table;
the storing module is further configured for:
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

8. The information storage system of claim 7, wherein the information storage system further comprises:
an updating module, configured for, if receiving the configuration information of tags updated in the user information view, updating the column families and/or sub-columns in the database as well as updating the tag configuration table.

9. The information storage system of claim 8, wherein the updating module is further configured for:
if receiving updating information of the information item, updating the information item stored in the sub-column according to the updating information.

10. The information storage system of claims 7, the storing system is further configured for: obtaining an extension tag of the information item, storing the extension tag of the information item into the sub-column corresponding to the sub-class tag.

11. An information storage device, wherein the information storage device comprises a processor, a network interface, and a storage medium;
the storage medium stores an information storage program;
the network interface is connected with a database for communicating with the database;
the processor is configured for executing the information storage program to perform following steps:
receiving an information item and a corresponding information tag from a user information view;
determining a column family corresponding to the information tag by means of a preset tag configuration table;
selecting the column family corresponding to the information tag from column families pre-configured in a database, storing the information item to the column family corresponding to the information tag.

12. The information storage device of claim 11, wherein the information tag comprises a first-class tag and a sub-class tag, the column family comprises one or multiple sub-columns, the processor is configured for executing the information storage program to perform following steps:
determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

13. The information storage device of claim 12, wherein the processor is configured for executing the information storage program to perform a following step:
if receiving the configuration information of tags updated in the user information view, updating the column families and/or sub-columns in the database as well as updating the tag configuration table.

14. The information storage device of claim 13, wherein the processor is configured for executing the information storage program to perform a following step:
if receiving updating information of the information item, updating the information item stored in the sub-column according to the updating information.

15. The information storage device of claim 12, wherein the processor is configured for executing the information storage program to perform a following step:
obtaining an extension tag of the information item, storing the extension tag of the information item into the sub-column corresponding to the sub-class tag.

16. A computer-readable storage medium with one or more programs stored thereon, which, when being executed by one or more processors, cause the one or more processors to perform following steps:
receiving an information item and a corresponding information tag from a user information view;
determining a column family corresponding to the information tag by means of a preset tag configuration table;
selecting the column family corresponding to the information tag from column families pre-configured in a database, storing the information item to the column family corresponding to the information tag.

17. The storage medium of claim 16, wherein the information tag comprises a first-class tag and a sub-class tag, the column family comprises one or multiple sub-columns, when being executed by the one or more processors, the one or more programs cause the one or more processors to perform following steps:
determining, by means of the preset tag configuration table, the column family corresponding to the first-class tag and the sub-column corresponding to the sub-class tag;
selecting the column family corresponding to the first-class tag from column families pre-configured in the database; and
selecting the sub-column corresponding to the sub-class tag, from the column family corresponding to the first-class tag, storing the information item into the sub-column corresponding to the sub-class tag.

18. The storage medium of claim 17, wherein when being executed by the one or more processors, the one or more programs cause the one or more processors to perform a following step:
if receiving the configuration information of tags updated in the user information view, updating the column families and/or sub-columns in the database as well as updating the tag configuration table.

19. The storage medium of claim 18, wherein when being executed by the one or more processors, the one or more programs cause the one or more processors to perform a following step:
if receiving updating information of the information item, updating the information item stored in the sub-column according to the updating information.

20. The storage medium claim 17, wherein when being executed by the one or more processors, the one or more programs cause the one or more processors to perform a following step:
obtaining an extension tag of the information item, storing the extension tag of the information item into the sub-column corresponding to the sub-class tag.
